# FASCICULE DE BREVET EUROPEEN

(11) **EP 1 794 660 B1**
(45) Date de publication et mention de la délivrance du brevet: **01.09.2010**
(21) Numéro de dépôt: 05807390.9
(22) Date de dépôt: 26.09.2005
(51) Int. Cl.: G05D 1/02, G08G 5/04

(54) **PROCEDE ET DISPOSITIF D'AIDE AU PILOTAGE D'UN AERONEF A VOILURE TOURNANTE AU VOISINAGE D'UN POINT DE POSE OU DE DECOLLAGE**
STEUERUNGSASSISTENZVERFAHREN UND VORRICHTUNG FÜR DREHFLÜGELFLUGZEUG ZUR VERWENDUNG IN DER NÄHE EINES START- ODER LANDEPLATZES
ROTARY-WING AIRCRAFT PILOTING ASSISTANCE METHOD AND DEVICE FOR USE CLOSE TO A TAKE-OFF OR LANDING SITE

(30) Priorité: 28.09.2004 FR 0410275
(43) Date de publication de la demande: 13.06.2007
(73) Titulaire: EUROCOPTER, 13725 Marignane Cédex (FR)
(72) Inventeur: ASTRUC, Joël, F-13540 PUYRICARD (FR)
(74) Mandataire: GPI & Associés
(86) Numéro de dépôt international: PCT/FR2005/002383
(87) Numéro de publication internationale: WO 2006/035153

(56) Documents cités:
- WO-A-00/39775
- WO-A-02/39058
- WO-A-02/45048
- FR-A- 2 717 934
- FR-A- 2 747 492
- FR-A- 2 783 500

## Description

La présente invention est relative à un procédé et à un dispositif d'aide au pilotage d'un aéronef à voilure tournante au voisinage d'un point de posé ou d'un point de décollage.

Le domaine technique de l'invention est celui de la fabrication de systèmes de pilotage d'un aéronef à voilure tournante tel qu'un hélicoptère.

Un objectif de l'invention est de donner au pilote d'un aéronef les moyens de définir rapidement un point de posé et une procédure d'approche et/ou de décollage qui soient sécurisés par rapport au relief entourant ce point.

Un objectif de l'invention est de permettre que ces moyens soient utilisables en vol afin que le pilote, dans des missions spécifiques de type service médical d'urgence EMS (« Emergency Medical Service »), puisse construire en vol une partie de sa route future. Pour cela, elle doit être rapide à mettre en oeuvre et donner au pilote une complète perception de ce qu'il est en train de construire.

Un objectif de l'invention est de permettre de définir des procédures d'atterrissage et de décollage utilisables aussi bien pour des vols VMC (Visual Meteorological Conditions), dans lesquels le pilote peut assurer visuellement sa sécurité par rapport au relief, que pour des vols IMC (Instrument Meteorological Conditions), dans lequel il n'a pas la vue du relief et où la sécurité de son vol est assurée par le suivi précis d'une route préalablement sécurisée par exploitation de bases de données de terrain.

Pour construire un plan de vol sécurisé, un pilote peut exploiter des cartes aéronautiques sur lesquelles figurent les reliefs ; en appliquant des marges de survol, il en déduit des points de passage et des altitudes de vol qu'il peut ensuite saisir en aveugle. Cette saisie peut être réalisée sur un terminal dédié du type CDU (Control and Display Unit). La sécurité de cette solution est assez faible car elle est tout à la fois liée à la qualité de la saisie des points et segments et à la qualité de l'exploitation des cartes aéronautiques.

De nombreux systèmes anti-collision pour aéronefs ont été proposés.

Selon le brevet US 6421603B1, le pilote définit une toute et le système vérifie les interférences entre la route et le sol, à partir de données contenues dans une base de données « terrain », Le pilote peut modifier sa route, afin de déterminer, par itérations successives, une solution sécurisée.

Selon les brevets FR 2789771 et US 6424889B1, un système calcule une trajectoire horizontale d'évitement de zones dangereuses en fonction du relief connu par une base de données de terrain et en fonction des contraintes données par le pilote ; cela permet de définir une route réputée sécurisée par rapport aux obstacles, mais nécessite des ressources de calcul importantes. Ce système ne permet pas au pilote de maîtriser l'élaboration de la route ; le pilote découvre à la fin d'un calcul la solution proposée et peut ensuite modifier les contraintes pour un nouveau calcul.

Ces systèmes ne sont pas adaptés aux phases d'approche ou de décollage, et ne provoquent pas une visualisation ergonomique des risques encourus lors de ces phases de vol.

Les demandes de brevet FR 2813963 et US 2003107499 proposent un dispositif d'aide à la navigation aérienne à embarquer sur un aéronef qui comporte un module de visualisation agencé pour afficher en temps réel une représentation bidimensionnelle du relief devant l'appareil, liée à la position et à la dynamique de l'appareil ; cette représentation porte sur un domaine visualisé en forme de secteur angulaire dont le sommet correspond à la position de l'aéronef ; selon ces documents, la signalisation d'alertes est partiellement inhibée en phase d'atterrissage ou de décollage.

Un tel système de visualisation n'est pas adapté à la définition d'une procédure d'approche ou de décollage sûre pour un aéronef à voilure tournante.

Un objectif de l'invention est de proposer un procédé et un dispositif d'aide au pilotage d'un tel aéronef dans ces phases de vol.

Le document WO-02/39058 est relatif à un système d'aide à la navigation aérienne qui affiche des données de navigation dans un mode horizontal et dans un mode vertical, lors de l'apparition d'un événement tel que la détection d'un obstacle proche.

Un tel système qui correspond au préambule de la revendication principale, n'est pas adapté à la définition d'une procédure d'approche ou de décollage sûre pour un point de posé quelconque.

Un objectif de l'invention définie dans les revendications, est de proposer un procédé et un dispositif d'aide à la navigation aérienne, qui soient améliorés ou qui remédient, en partie au moins, aux lacunes et inconvénients des procédés et dispositifs connus.

Selon un aspect, il est proposé un procédé d'aide au pilotage d'un aéronef dans lequel on détermine et on affiche sur un écran de visualisation représentant l'environnement géographique autour d'un point de posé, le lieu de tous les points d'entrée des procédures d'atterrissages non sécurisées par rapport au relief, et/ou le lieu de tous les points de sortie des procédures de décollage non sécurisées par rapport au relief, pour un point de posé et une altitude d'approche (ou respectivement un point et une altitude de départ) donnée.

Au sens de la présente demande, l'expression « point de posé » désigne - selon le contexte - un point d'atterrissage et/ou un point de décollage.

Le pilote peut ainsi directement et interactivement positionner le point d'entrée ou de sortie de sa procédure d'atterrissage/décollage dans une zone où les points d'entrée ou de sortie sont réputés sécurisés, tout en optimisant son choix en fonction de contraintes telles que le sens du vent, les zones dont le survol est interdit, les performance de l'aéronef.

L'invention permet de déterminer un point de posé qui donne le maximum de solutions de posé, et ainsi de choisir le point de posé dont les solutions de posé se rapprochent le plus des contraintes précédentes,

Pour déterminer le lieu de ces points d'entrée et/ou de ces points de sortie correspondant à des procédures non sécurisées, selon un autre aspect de l'invention, on détermine une surface s'appuyant sur des obstacles s'étendant autour du point de posé. Cette surface comporte un point anguleux qui est ancré sur (confondu avec) le point de posé, et présente une forme évasée vers le haut à partir de ce point anguleux. On calcule l'intersection de cette surface avec un plan ou un palier correspondant à l'altitude d'approche ou de départ, pour obtenir une courbe limite s'étendant dans ce plan ou palier ; et on détermine le lieu des points d'entrée et/ou de sortie non sûrs comme étant la partie du plan ou palier s'étendant à l'extérieur de cette courbe limite.

Au sens de la présente demande, le terme « obstacle » peut désigner soit un obstacle géographique naturel (c'est-à-dire un point ou une zone saillant(e) du relief naturel), soit un obstacle artificiel tel qu'une construction et/ou un bâtiment érigé(e) à partir du sol.

Les coordonnées d'obstacles naturels sont généralement regroupées en une base de donnée dénommée « modèle numérique de terrain ».

Conformément à une caractéristique préférée de l'invention, on présente au pilote un diagramme comportant le point de posé, ladite courbe limite ainsi qu'au moins un arc de cercle, en particulier un demi-cercle ou un cercle complet, centré sur le point de posé et correspondant à une pente de descente (ou de montée) prédéterminée ; cette pente (mesurée par rapport à l'horizontale) est de préférence située dans une plage allant de 2 degrés à 15 degrés.

De préférence, une partie au moins du diagramme qui est située à l'extérieur de ladite courbe limite, par référence au point du diagramme symbolisant le point de posé, qui fait donc partie du lieu des points d'entrée ou de sortie à éviter, présente une couleur (par exempte rouge) ou texture (par exemple des hachures) symbolisant un danger de collision avec des obstacles entourant le point de posé.

Pour la détermination de ladite surface et donc de ladite courbe limite, différents profils ou gabarits d'approche (respectivement de départ) peuvent être utilisés : un profil ou gabarit peut comporter un ou plusieurs segments, généralement rectiligne(s).

Lorsque ce profil est constitué d'un seul segment rectiligne, ladite surface est engendrée par des droites passant par le point de posé et s'appuyant sur des obstacles situés autour du point de posé ; cette surface présente alors une forme générale de demi cône ou cône - de section non circulaire - dont le sommet correspond au point de posé.

La courbe limite formée par la trace de cette surface dans un plan correspondant à l'altitude d'approche ou de départ, est constituée de tronçons (généralement courbes) correspondant à la trace dans ce plan d'un rayon émis au point de posé et rasant le sommet des obstacles entourant le point de posé ; ces tronçons forment généralement une courbe limite discontinue, où un espace entre deux tronçons voisins de cette courbe limite correspond à une zone d'approche ou de départ sécurisée.

En variante, on peut prévoir des profils de descente plus complexes, soit rectilignes dans le plan horizontal et composés de plusieurs segments de pentes fixes et/ou variables, soit composés de segments non alignés, ni dans le plan vertical, ni dans le plan horizontal, ayant certaines de leurs caractéristiques fixes, d'autres variables. Ces profils complexes, sont caractérisés par un point d'entrée, situé à l'altitude sécurisée H précédemment définie, par un point de posé, et éventuellement par leur orientation géographique.

On peut notamment utiliser un profil ou gabarit composé de plusieurs segments alignés dans le plan horizontal, mais de pentes différentes, pour optimiser des trajectoires antibruit.

Selon une autre variante correspondant à une approche en « T », le profil est composés de 3 segments consécutifs :
- un premier segment horizontal ;
- un deuxième segment dans le même plan horizontal que le premier segment mais parcouru avec un cap à 90° du premier segment ;
- un troisième segment en pente vers le Point de Posé (PP) et suivant le même cap que le deuxième segment.

Les segments sont consécutifs ou adjacents (se rejoignent deux à deux en un point commun) ; les projections sur le plan horizontal de deux segments consécutifs peuvent être alignées, si les deux segments ont rigoureusement le même cap.

Dans tous les cas, l'appui du gabarit (ancré sur le point de posé) sur les obstacles environnant le point de posé, permet de déterminer le lieu des points d'entrée et/ou de sortie non sécurisés, dans le plan ou palier correspondant à l'altitude considérée.

Un dispositif permettant de mettre en oeuvre le procédé défini et décrit dans la présente, peut être embarqué ou embarquable à bord de l'aéronef. Ce dispositif comporte ;
- un modèle numérique de terrain éventuellement complété par une base de données comportant des caractéristiques (coordonnées et dimensions) d'obstacles artificiels ;
- un calculateur pourvu de moyens de lecture du modèle numérique de terrain et éventuellement des caractéristiques des obstacles artificiels;
- un outil d'introduction dans le calculateur de coordonnées d'un point de posé ou de décollage et le cas échéant d'une altitude d'approche ou de départ, qui est susceptible d'être manipulé par un pilote de l'aéronef ;
- des moyens coopérant avec le calculateur pour déterminer, à partir des coordonnées du point de posé ou de décollage et de l'altitude d'approche ou de départ, le lieu des points d'entrée et/ou de sortie à cette altitude qui, compte tenu d'un profil ou gabarit de montée/descente prédéterminé, ne sont pas sûrs; et
- des moyens pour présenter au pilote ledit lieu.

L'invention permet au pilote de voir directement toutes les solutions de procédures d'approches et de départ sécurisées par rapport à la configuration du relief. Il peut ainsi immédiatement choisir celle qui satisfait aux autres contraintes, sans avoir besoin de procéder par itérations successives.

Le procédé selon l'invention lui permet de bâtir sa trajectoire.

Cette fonction peut être utilisée indépendamment de toute autre pour choisir, en une seule itération, un point de posé et les procédures d'approche et de départ correspondantes qui soient sécurisées par rapport au relief.

Elle peut être aussi associée aux dispositifs décrits dans les brevets précédemment cités, elle permet alors d'éviter la phase d'itérations successives permettant de trouver une trajectoire sécurisée.

D'autres caractéristiques et avantages de l'invention apparaissent dans la description suivante qui se réfère aux dessins annexés et qui illustre, sans aucun caractère limitatif, des modes préférés de réalisation de l'invention.
La figure 1 illustre schématiquement l'organisation des principaux constituants d'un dispositif selon l'invention.
La figure 2 illustre schématiquement le calcul de tronçons d'une courbe limite par balayage de l'espace entourant un point de posé par un simple profil d'approche rectiligne, selon un mode de réalisation de l'invention.
La figure 3 illustre un diagramme susceptible d'être présenté à un pilote, le diagramme comportant une courbe limite similaire à celle de la figure 2.
La figure 4 illustre schématiquement le calcul de tronçons d'une courbe limite par balayage de l'espace entourant un point de posé par un profil d'approche comportant trois segments rectilignes, selon un autre mode de réalisation de l'invention.
La figure 5 illustre des exemples de gabarits à trois segments rectilignes utilisables selon le mode de réalisation de la figure 4.
La figure 6 illustre une variante d'un digramme présenté à un pilote.

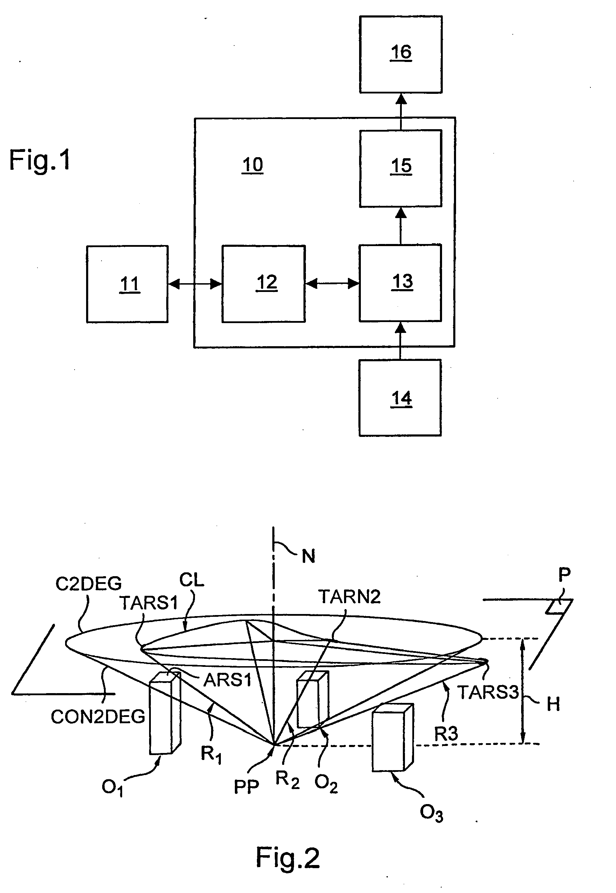

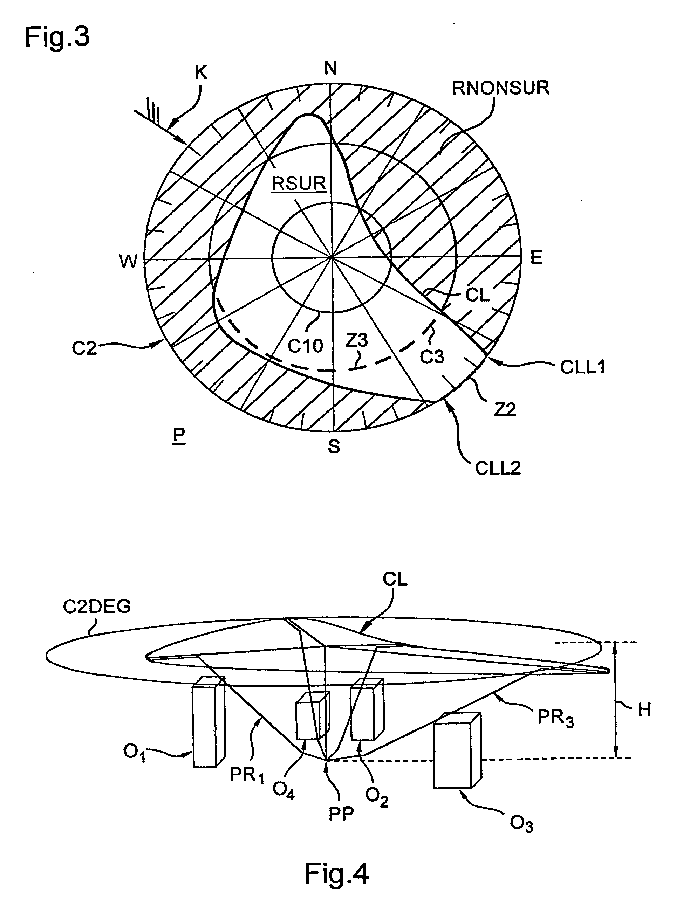

Par référence à la figure 1, un dispositif d'aide au pilotage selon l'invention comporte :
- une base de données 11 répertoriant des coordonnées et dimensions d'obstacles naturels et/ou artificiels tels que ceux schématiquement représentés sous la forme de parallélépipèdes rectangle aux figures 2 et 4 ;
- un calculateur 10 pourvu notamment de moyens 12 de lecture des caractéristiques d'obstacles de la base de données 11 ;
- un périphérique d'entrée 14 tel qu'un manche à balai ou autre dispositif de pointage permettent l'introduction dans le calculateur 10 de coordonnées d'un point de posé ou de décollage, et le cas échéant d'une altitude d'approche ou de départ;
- un module ou programme 13 de calcul pour déterminer, à partir des coordonnées du point de posé ou de décollage et de l'altitude d'approche ou de départ introduites à l'aide du périphérique 14, le lieu des points d'entrée et/ou de sortie à cette altitude qui, compte tenu d'un profil ou gabarit de montée/descente prédéterminé, ne sont pas sûrs ; et
- un module ou programme 15 de traitement des résultats délivrés par le module 13, qui est connecté à un dispositif 16 de visualisation pour présenter au pilote un diagramme représentant le lieu des points d'entrée/sortie sûrs et le lieu des points non sûrs.

Sur cette figure, les flèches reliant les organes ou unités 11 à 16 représentent les connexions entre ces unités ou modules ainsi que le sens des principaux échanges de données par ces connexions.

Par référence à la figure 2, trois obstacles O1, O2 et O3 s'étendent autour du point de posé PP. Un rayon ou une droite passant par le point PP, formant avec l'horizontale un angle faible constant, par exemple égal à deux degrés, et balayant l'espace sur 360° autour du point PP, génère un cône CON2DEG dont le sommet est confondu avec PP, qui présente une symétrie de révolution selon la normale N au sol au point PP, et dont la section transversale à cet axe N est circulaire.

Ainsi, la trace de ce cône dans le plan P horizontal situé à l'altitude H au dessus du point PP, forme un cercle C2DEG centré sur la projection verticale du point PP dans le plan P.

De façon similaire, la trace d'un rayon rectiligne R1 passant par PP et glissant le long de l'arête ARS1 au sommet de l'obstacle 01, forme dans le plan P un segment TARS1 de courbe limite. De la même façon, la trace d'un rayon rectiligne R2 passant par PP et glissant le long de l'arête ARS2 au sommet de l'obstacle O2, forme dans le plan P un segment TARS2, et la trace d'un rayon rectiligne R3 passant par PP et glissant le long de l'arête ARS3 au sommet de l'obstacle O3, forme dans le plan P un segment TARS3 de courbe limite.

Une courbe limite CL intégrant ces segments TARS1 à TARS3 peut ainsi être calculée à partir des traces de rayons s'appuyant sur les obstacles entourant le point de posé, ce qui équivaut à déterminer, en fonction du relief, des pentes minimales d'approche ou de départ.

Par référence à la figure 3, la courbe limite CL s'étend à l'intérieur du cercle C2 centré sur la projection verticale du point PP ; la courbe CL est ouverte : elle présente deux extrémités CLL1 et CLL2 correspondant à son intersection avec le cercle C2, La courbe CL sépare le disque délimité par C2 en deux régions : une région centrale RSUR incluant la projection de PP, qui est le lieu des points d'entrée ou sortie sécurisés, et une région périphérique RNONSUR qui est le lieu des points d'entrée ou sortie non sécurisés, et qui est hachurée.

Le diagramme comporte en outre deux cercles C3 et C10 concentriques au cercle C2 ; ces deux cercles correspondent à la trace dans le plan P (le plan de la figure 3) de rayons passant par PP et balayant l'espace autour de ce point avec une pente de trois degrés (pour C3) et de dix degrés (pour C10) respectivement.

Ce diagramme permet au pilote de constater qu'une zone Z2 d'approche sûre selon un profil de descente rectiligne incliné de deux degrés, s'étend entre les points CLL1 et CLL2, selon un arc du cercle C2 ; ce diagramme permet également de constater qu'une zone Z3 d'approche sécurisée selon un profil de descente rectiligne incliné de trois degrés, s'étend selon un arc du cercle C3.

En pratique, pour une procédure d'approche au voisinage d'un point de posé, le pilote choisit une altitude d'approche initiale qu'il considère comme sûre pour la zone autour du point de posé. Cette altitude définit un plan horizontal ou palier situé à une altitude H au dessus du point de posé. Sans tenir compte du relief et du vent, le pilote peut choisir à partir de cette altitude un profil de descente pour rejoindre son point de posé.

Le profil de descente le plus simple est une droite partant de l'altitude du plan précédent et rejoignant le point de posé. La pente de cet axe d'approche peut varier entre des bornes en fonction des capacités de l'appareil et de sa configuration. La procédure ainsi décrite comprend un point d'entrée défini par l'intersection entre le plan (ou palier) et ladite droite, et un point final qui est le point de posé.

Le dispositif balaye l'espace autour du point de posé, généralement sur 180° ou 360° avec un gabarit décrivant la procédure décrite précédemment, en faisant le cas échéant varier la pente de ce gabarit. Il détermine ainsi les profils partant de l'altitude H et rejoignant le point de posé qui sont sécurisés et ceux qui sont en conflit avec le sol et/ou les obstacles dont la position et la géométrie sont enregistrées dans une base de données.

Le dispositif trace sur un écran de visualisation affichant l'environnement géographique autour d'un point de posé, le lieu de tous les points d'entrée de profils de descente non sécurisés pour l'altitude d'approche initiale, H définie précédemment.

Un cône inversé dont le demi angle d'ouverture est de 88° (90°-2°), dont le sommet est le point géographique considéré et dont la base est à l'altitude de l'approche initiale est exploré sur 360°. Tout autour du point de posé sont déterminées les profils minimaux utilisables en fonction du relief. Les points d'entrée de ces profils sont projetés sur la base de ce cône.

La surface RNONSUR décrivant la portion de cône occultée par des obstacles est matérialisée de couleur rouge.

La taille affichée de ce dispositif est fonction de l'échelle d'affichage choisie et de l'altitude de l'approche initiale.

Si l'approche initiale considérée est à une hauteur de 4572 mètres (soit 1500 pieds) au dessus du point de posé, cette symbologie s'inscrit dans un cercle de rayon de 12.8748 mètres (soit 8 miles nautiques), correspondant à une pente de 2°.

Le pilote qui veut définir une approche sécurisée peut positionner directement le point d'entrée de sa procédure hors des zones non sécurisées, sur la partie Z2 du cercle C2 correspondant aux 2° de pente.

Il peut effectuer cette action soit avec des moyens d'introductions de données traditionnels, ou par des moyens de saisie de coordonnées géographiques.

Dans ce dernier cas, le pilote positionne directement son point d'entrée de telle façon que son profil de descente soit sécurisé, le calcul des zones des points d'entrée/sortie sûrs et non sûrs étant effectué en temps réel, en fonction de la position du point de posé correspondant à la position du dispositif de saisie. N'ayant plus à vérifier principalement le critère de sécurisation par rapport aux obstacles, il prend plus facilement en compte d'autres paramètres tels que le sens du vent, le non survol d'agglomération, la gestion de son carburant.

Grâce à ce dispositif, le pilote peut balayer la zone de posée avec son point de posé ; il peut observer la figure CL associée calculée en temps réel et trouver ainsi le point et l'axe de posé pour lequel les lieux des points d'entrée sont optimaux pour les contraintes qu'il s'est fixé telles que sens du vent, le non survol de certaines zones ou une pente limite.

La simplicité, la rapidité et l'interactivité de ce dispositif permettent de l'utiliser en cours de vol pour définir une nouvelle route non encore définie, en tenant compte des pentes inaccessibles en azimut et en orientation.

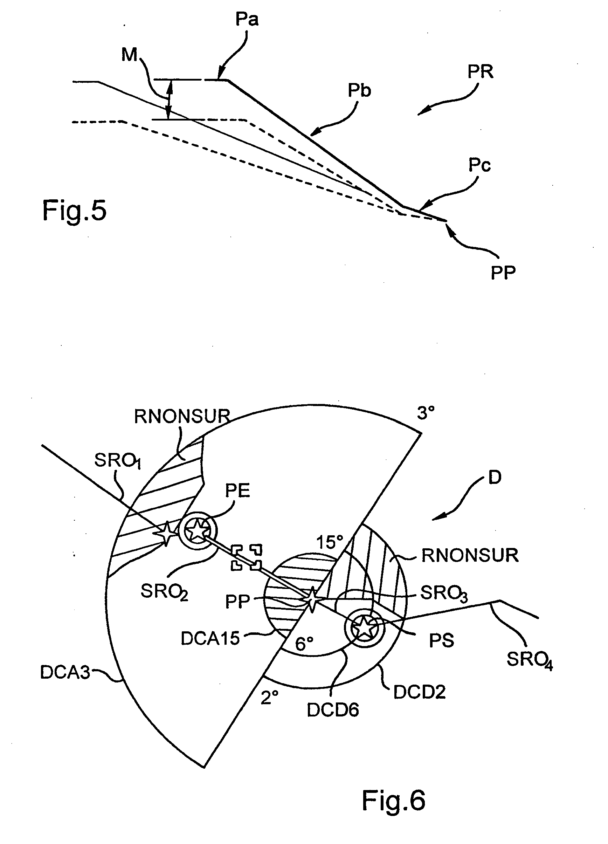

Par référence aux figures 4 et 5, le simple rayon rectiligne de la figure 2 peut être remplacé par un profil PR, PR1, PR2 pour le calcul de la courbe CL. Le profil PR comporte trois segments rectilignes Pa, Pb et Pc, de pentes différentes, à chacun desquels peut être associée une marge d'altitude M qui peut être (pré)déterminée pour compenser des erreurs de positionnement du point PP et/ou des obstacles, et/ou pour tenir compte de marges de survol.

Par référence à la figure 6, le diagramme D comprend deux demi cercles DCA3 et DCA15, centrés sur PP et correspondant respectivement à des pentes d'approche du point PP selon des pentes de trois et quinze degrés ; en outre, le diagramme D comprend deux demi cercles DCD2 et DCD6, également centrés sur PP et correspondant respectivement à des pentes de décollage du point PP selon des pentes de deux et six degrés.

Un point PE représente un point d'entrée -à une altitude HE pour laquelle le (demi)diagramme d'approche a été déterminé- pour lequel une approche selon une pente comprise entre 3 et 15 degrés, est sécurisée. Un point PS représente un point de sortie -à une altitude HS pour laquelle le (demi)diagramme de décollage a été déterminé- pour lequel un décollage du point PP selon une pente comprise entre 6 et 2 degrés, est sécurisé.

La pente limite de montée en cas de panne d'un moteur d'un aéronef comprenant au moins deux moteurs peut être matérialisée. Elle dépend des conditions extérieures (vent, température, pression) et des performance de l'aéronef. Cette valeur de pente peut être enregistrée dans une mémoire du calculateur 10 et/ou peut être introduite par le pilote à l'aide de l'organe 14 de saisie de données.

Un ou plusieurs segments SRO1, SRO2, SR03, SR04 de la route choisie par le pilote sont représentés sur ce diagramme ; les points cardinaux et la direction du vent peuvent y figurer, comme c'est le cas figure 3. Dans cet exemple, le segment SR02 représente la procédure d'approche finale et le segment SR03 représente la procédure de décollage.

Sur cette route, un symbole en forme d'étoile représente le point d'entrée (respectivement de sortie) ; ce symbole est entouré d'un premier cercle représentant une 1^{ère} marge correspondant à une erreur de positionnement du point d'entrée (respectivement du point de sortie), et d'un second cercle concentrique au premier et représentant une marge horizontale supplémentaire de pilotage.

## Revendications

1. Procédé d'aide au pilotage d'un aéronef au voisinage d'un point (PP) de posé ou de décollage ; suivant lequel ;
- on détermine, par des moyens (10 à 15) incluant un calculateur (10), le lieu (RNONSUR) des points (PE, PS) d'entrée et/ou de sortie pour une altitude (HE, HS) d'approche et/ou de départ donnée, qui ne sont pas sûrs pour atteindre ledit point de posé ou pour partir dudit point de décollage, à partir des coordonnées du point de posé ou de décollage introduites dans ledit calculateur (10) par un outil (14) d'introduction de coordonnées qui peut être manipulé par un pilote ; et
- on présente un diagramme (D) comportant ledit lieu (RNONSUR) sur un dispositif (16) de visualisation ;
**caractérisé en ce que** ledit lieu (RNONSUR) des points (PE, PS) d'entrée et/ou de sortie qui ne sont pas sûrs, est déterminé en déterminant un tronçon (TARS1, TARS2) de courbe limite (CL) correspondant à la trace, dans le plan ou palier (P) correspondant à ladite altitude (HE, HS), d'un profil ou gabarit (R1, R2, R3, PR, PR1, PR3) de montée/descente qui passe par le point de posé ou de décollage, et qui rase - ou s'appuie sur - le sommet d'un obstacle (O1, O2, O3) s'étendant au voisinage du point de posé ou de décollage ;
ledit tronçon (TARS1, TARS2) de courbe limite (CL) séparant un lieu (RSUR) des points d'entrée et/ou de sortie sûrs des points d'entrée et/ou de sortie qui ne sont pas sûrs.

2. Procédé selon la revendication 1, dans lequel
on affiche le point de posé ou de décollage, ainsi que le tronçon (TARS1, TARS2) de courbe limite (CL), sur le dispositif (16) de visualisation.

3. Procédé selon l'une quelconque des revendications 1 ou 2, dans lequel on affiche sur le dispositif (16) de visualisation le diagramme (D) comportant le point de posé ou de décollage, au moins une portion d'un ou plusieurs cercle(s) (C2, C3, DCA3, DCA15, DCD2, DCD6) centré(s) sur ce point, et la portion de courbe limite au moins.

4. Procédé selon l'une quelconque des revendications 1 à 3, dans lequel on applique une première couleur ou texture à une partie (RSUR) du diagramme qui s'étend à l'intérieur de la portion de courbe limite, et on applique une seconde couleur ou texture, qui est différente de la première couleur ou texture, à une partie (RNONSUR) du diagramme qui s'étend à l'extérieur de cette portion de courbe limite, et on affiche ces parties du diagramme sur le dispositif (16) de visualisation.

5. Procédé selon l'une quelconque des revendications 1 à 4, dans lequel une marge (M) d'altitude est associée au profil ou gabarit pour compenser des erreurs de positionnement du point (PP) et/ou des obstacles, et/ou pour tenir compte d'une marge de survol.

6. Procédé selon l'une quelconque des revendications 1 à 5, dans lequel le profil ou gabarit comporte un seul segment rectiligne.

7. Procédé selon l'une quelconque des revendications 1 à 5, dans lequel le profil ou gabarit comporte plusieurs segments.

8. Procédé selon la revendication 7 dans lequel les projections des segments dans un plan vertical sont alignées.

9. Procédé selon la revendication 7 dans lequel les projections des segments dans un plan horizontal sont alignées.

10. Procédé selon l'une quelconque des revendications 1 à 9 dans lequel on affiche sur le dispositif (16) un symbole représentant le point d'entrée et/ou de sortie (PE, PS), ce symbole étant entouré d'un premier cercle représentant une première marge correspondant à une erreur de positionnement du point et étant entouré d'un second cercle concentrique au premier et représentant une marge horizontale supplémentaire de pilotage.

11. Dispositif d'aide au pilotage d'un aéronef au voisinage d'un point (PP) de posé ou de décollage, qui comporte :
- une base de données (11) comportant des caractéristiques d'obstacles (O1, O2, O3);
- un calculateur (10) pourvu de moyens (12) de lecture des caractéristiques d'obstacles de la base de données ;
- un outil (14) d'introduction dans ledit calculateur (10) de coordonnées d'un point de posé ou de décollage;
- des moyens (13) coopérant avec le calculateur (10) pour déterminer, à partir des coordonnées du point de posé ou de décollage et d'une altitude d'approche ou de départ, le lieu (RNONSUR) des points d'entrée et/ou de sortie à cette altitude qui, compte tenu d'un profil (R1, R2, R3, PR, PR1, PR3) ou gabarit de montée/descente prédéterminé, ne sont pas sûrs ; ce dispositif étant **caractérisé en ce qu'**il comporte un dispositif (16) de visualisation auquel est connecté un module (15) de traitement des résultats délivrés par les moyens (13), et **en ce que** ces moyens (13) déterminent ledit lieu (RNONSUR) non sûr conformément au procédé selon l'une des revendications 1 à 10.

12. Dispositif selon la revendication 11 dans lequel la base de données (11) comporte des coordonnées et dimensions d'obstacles (O1, O2, O3), naturels ou d'obstacles artificiels.

13. Dispositif selon la revendication 11 ou 12 qui comporte un outil (14) d'introduction ou de saisie dans le calculateur (10) d'une altitude d'approche ou de départ, qui est susceptible d'être manipulé par un pilote de l'aéronef.

14. Dispositif selon l'une des revendications 11 à 13 dans lequel l'outil (14) de saisie est un dispositif de pointage ou un manche à balai.

15. Dispositif selon l'une quelconque des revendications 13 à 14 qui est embarqué ou embarquable à bord d'un aéronef.

## Claims

1. A method for assisting the piloting of a rotary-wing aircraft close to a point (PP) for landing or take-off; in which:
- means (10 to 15) including a computer (10) are used to determine, from coordinates of the landing or take-off point which are input into the said computer (10) by a tool (14) for inputting coordinates which may be manipulated by a pilot, the location (RNONSUR) of points (PE, PS) of entry and/or exit at a given altitude of approach and/or departure (HE, HS) which are unsafe for reaching the said point for landing or for departing from the said take-off point; and
- a chart (D) including the said location (RNONSUR) is presented on a display device (16);
**characterised in that** the said location (RNONSUR) of the points (PE, PS) of entry and/or exit which are unsafe is determined by determining a segment (TARS1, TARS2) of a limit curve (CL) corresponding to the trace in the plane or level (P) that corresponds to the said altitude (HE, HS) of a take-off or landing profile or template (R1, R2, R3, PR, PR1, PR3) which passes through the point for landing or take-off and grazes - or bears against - the top of an obstacle (O1, O2, O3) extending close to the point for landing or take-off;
in which the said segment (TARS1, TARS2) of the limit curve (CL) separates a location (RSUR) of the points of entry and/or exit which are safe from the points of entry and/or exit which are unsafe.

2. A method according to Claim 1, in which
the point of landing or take-off and the segment (TARS1, TARS2) of the limit curve (CL) are displayed on the display device (16).

3. A method according to either of Claims 1 or 2, in which there is displayed on the display device (16) the chart (D) including the point of landing or take-off, at least one portion of one or more circles (C2, C3, DCA3, DCA15, DCD2, DCD6) which is or are centred on this point, and at least the portion of the limit curve.

4. A method according to any one of Claims 1 to 3, in which a first colour or texture is applied to a part (RSUR) of the chart which extends inside the portion of the limit curve, and a second colour or texture different from the first colour or texture is applied to a part (RNONSUR) of the chart which extends outside this portion of the limit curve, and these parts of the chart are displayed on the display device (16).

5. A method according to any one of Claims 1 to 4, in which an altitude margin (M) is associated with the profile or template in order to compensate for errors in positioning the point (PP) and/or the obstacles, and/or in order to take account of a margin for overflight.

6. A method according to any one of Claims 1 to 5, in which the profile or template includes a single rectilinear segment.

7. A method according to any one of Claims 1 to 5, in which the profile or template includes a plurality of segments.

8. A method according to Claim 7, in which the projections of the segments in a vertical plane are aligned.

9. A method according to Claim 7, in which the projections of the segments in a horizontal plane are aligned.

10. A method according to any one of Claims 1 to 9, in which there is displayed on the device (16) a symbol representing the point of entry and/or exit (PE, PS), in which this symbol is surrounded by a first circle representing a first margin corresponding to an error in positioning the point and surrounded by a second circle which is concentric with the first and represents an additional horizontal margin for piloting.

11. A device for assisting the piloting of a rotary-wing aircraft close to a point (PP) for landing or take-off; which includes:
- a database (11) including characteristics of obstacles (O1, O2, O3);
- a computer (10) provided with means (12) for reading the characteristics of obstacles in the database;
- a tool (14) for inputting in the said computer (10) coordinates of a point for landing or take-off;
- means (13) which cooperate with the computer (10) in order to determine from the coordinates of the point for landing or take-off and from an altitude of approach or departure the location (RNONSUR) of the points of entry and/or exit at this altitude which, taking into account a predetermined take-off/landing profile (R1, R2, R3, PR, PR1, PR3) or template, are unsafe; this device being **characterised in that** it includes a display device (16) to which there is connected a module (15) for processing the results supplied by the means (13), and **in that** these means (13) determine the said unsafe location (RNONSUR) in accordance with the method according to one of Claims 1 to 10.

12. A device according to Claim 11, in which the database (11) includes coordinates and dimensions of natural obstacles (O1, O2, O3) or manmade obstacles.

13. A device according to Claim 11 or 12, including a tool (14) for inputting or capturing in the computer (10) an altitude of approach or departure which is capable of being manipulated by a pilot of the rotary-wing aircraft.

14. A device according to one of Claims 11 to 13, in which the tool (14) for capturing is a pointing device or joystick.

15. A device according to either of Claims 13 to 14, which is installed or installable on board a rotary-wing aircraft.

## Patentansprüche

1. Steuerungsassistenzverfahren für ein Drehflügelflugzeug zur Verwendung in der Nähe eines Start- oder Landeplatzes (PP), bei dem:
- mit Mitteln (10-15), die einen Rechner (10) umfassender Ort (RNONSUR) von Eingangs- und/oder Ausgangspunkten (PE, PS) für eine vorgegebene Annäherungs- und/oder Starthöhe bestimmt wird, die nicht sicher sind, um den Landepunkt zu erreichen oder um von dem Startpunkt aus abzuheben, ausgehend von Koordinaten des Lande- oder Startpunktes, die in den Rechner (10) mittels Mitteln (14) zum Einführen von Koordinaten, die von einem Piloten bedienbar sind, eingeführt werden, und
- ein Diagramm (D), welches den Ort (RNONSUR) beinhaltet auf einem Anzeigegerät (16) gezeigt wird,
**dadurch gekennzeichnet, dass** der Ort (RNONSUR) der Eingangs- und/oder Ausgangspunkte (PE, PS), die nicht sicher sind, bestimmt wird, indem ein Grenzkurvenabschnitt (TARS1, TARS2) bestimmt wird, der der Spur eines Profils (R1, R2, R3, PR, PR1, PR3) des Aufstiegs/der Landung in der Ebene, die der Höhe (HE, HS) entspricht, wobei das Profil durch den Lande- oder Startpunkt verläuft, und die Spitze eines Hindernisses (O1, O2, O3) berührt, welches in den Nähe des Start- oder Landepunktes liegt,
wobei der Grenzkurvenabschnitt (TARS1, TARS2) einen Ort (RSUR) der sicheren Eingangs- und/oder Ausgangspunkte von nicht sicheren Eingangs- und/oder Ausgangspunkten trennt.

2. Verfahren nach Anspruch 1, bei dem der Start- oder Landepunkt sowie der Abschnitt (TARS1, TARS2) der Grenzkurve (CL) auf dem Anzeigegerät (16) angezeigt wird.

3. Verfahren nach einem der Ansprüche 1 oder 2, bei dem auf dem Anzeigegerät (16) das Diagramm (D) angezeigt wird, welches den Lande- oder Startpunkt, mindestens einen Teil eines Kreises oder mehrerer Kreise (C2, C3, DCA3, DCA15, DCD2, DCD6) der bzw. die auf diesen Punkt zentriert ist bzw. sind und mindestens einen Teil der Grenzkurve aufweist.

4. Verfahren nach einem der Ansprüche 1 bis 3, bei dem eine erste Farbe oder Textur in einem Teil (RSUR) des Diagramms aufgetragen ist, der sich im Inneren des Teils der Grenzkurve befindet und eine zweite Farbe oder Textur, die von der ersten Farbe oder Textur verschieden ist in einem Teil (RNONSUR) des Diagramms aufgetragen ist, der sich außerhalb dieses Teils der Grenzkurve erstreckt und diese Teile des Diagramms auf dem Anzeigegerät (16) dargestellt werden.

5. Verfahren nach einem der Ansprüche 1 bis 4, bei dem eine Höhenspanne (M) mit dem Profil verknüpft wird, um Positionierungsfehler des Punktes (PP) und/oder der Hindernisse zu kompensieren und/oder um eine Überflugsspanne zu berücksichtigen.

6. Verfahren nach einem der Ansprüche 1 bis 5, bei dem das Profil ein einziges gradliniges Segment aufweist.

7. Verfahren nach einem der Ansprüche 1 bis 5, bei dem das Profil mehrere Segmente aufweist.

8. Verfahren nach Anspruch 7, bei dem die Bereiche der Segmente in einer vertikalen Ebene zueinander ausgerichtet sind.

9. Verfahren nach Anspruch 7, bei dem die Projektionen der Segmente in einer horizontalen Ebene ausgerichtet sind.

10. Verfahren nach einem der Ansprüche 1 bis 9, bei dem auf dem Anzeigegerät (16) ein Symbol angezeigt wird, welches den Eingangs- und/oder Ausgangspunkt (PE, PS) anzeigt, wobei dieses Symbol mit einem ersten Kreis umgeben ist, der eine erste Spanne darstellt, die einen Positionierungsfehler des Punktes angibt und von einem zweiten, zum ersten Kreis konzentrischen Kreis umgeben ist, der eine zusätzliche horizontale Flugspanne angibt.

11. Steuerungsassistenzvorrichtung für ein Drehflügelflugzeug zur Verwendung in den Nähe eines Lande- oder Startplatzes, mit:
- einer Datenbank (11), welche Daten über Eigenschaften von Hindernissen (O1, O2, O3) aufweist,
- einem Rechner (10) mit Mitteln (12) zum Lesen der Daten über Eigenschaften der Hindernisse aus der Datenbank,
- einem Werkzeug (14) zum Einführen von Koordinaten eines Lande- oder Startplatzes in den Rechner (10),
- Mitteln (13) die mit dem Rechner (10) zusammenarbeiten um ausgehend von den Koordinaten des Lande- bzw. Startpunktes und einer Annäherungs- oder Starthöhe den Ort (RNONSUR) der Eingangs- und/oder Ausgangspunkte bei dieser Höhe unter Berücksichtigung eines Profils (R1, R2, R3, PR, PR1, PR3) einer vorbestimmten Landung bzw. eines vorbestimmten Starts zu bestimmen, wobei diese Werte nicht sicher nicht, **gekennzeichnet durch** ein Anzeigegerät (16), welches mit einem Modul (15) zur Verarbeitung der von den Mitteln 813) gelieferten Ergebnisse verbunden ist, und **dadurch**, dass die Mittel (13) nach dem Verfahren gemäß einem der Ansprüche 1 bis 10 den nicht sicheren Ort (RNONSUR) bestimmen.

12. Vorrichtung nach Anspruch 11, bei dem die Datenbank (11) Koordinaten und Abmessungen von natürlichen oder künstlichen Hindernissen (O1, O2, O3) aufweist.

13. Vorrichtung nach Anspruch 11 oder 12, die in dem Rechner (10) ein Werkzeug (14) zur Einführung einer Annäherungs- oder Starthöhe aufweist, wobei das Werkzeug von einem Piloten des Drehflügelflugzeugs bedient werden kann.

14. Vorrichtung nach einem der Ansprüche 11 bis 13, bei dem das Werkzeug (14) einen Cursor oder ein Joystick ist.

15. Vorrichtung nach einem der Ansprüche 13 oder 14, welche an Bord eines Drehflügelfluges untergebracht ist oder unterbringbar ist.
